# EUROPEAN PATENT SPECIFICATION

(11) **EP 2 780 238 B1**
(45) Date of publication and mention of the grant of the patent: **30.05.2018**
(21) Application number: 12848788.1
(22) Date of filing: 07.11.2012
(51) Int. Cl.: B65B 43/46, B65B 5/02, B65B 5/08, B65B 5/10, B25J 9/00, B65B 35/16, B65B 43/44

(54) **A PACKAGING ASSEMBLY**
VERPACKUNGSANORDNUNG
ENSEMBLE D'EMBALLAGE

(30) Priority: 15.11.2011 AU 2011904763
(43) Date of publication of application: 24.09.2014
(73) Proprietor: Adaptapack Pty Limited, Parramatta NSW 2150 (AU)
(72) Inventor: WALLS, Sam, Parramatta NSW 2150 (AU)
(74) Representative: Cabinet Plasseraud
(86) International application number: PCT/AU2012/001366
(87) International publication number: WO 2013/071340

(56) References cited:
- WO-A2-2010/003083
- FR-A1- 2 564 422
- GB-A- 1 269 377
- JP-A- H02 191 106
- US-A- 3 453 802
- US-A- 3 486 296
- US-A- 3 735 561
- US-A- 3 816 971
- US-A- 4 224 781
- US-A- 4 237 673
- US-A- 4 524 566
- US-A- 5 542 238
- US-A1- 2004 000 121
- US-A1- 2011 005 174
- US-B1- 6 209 293

## Description

### Field of Invention

The present invention relates to a packaging assembly and in particular to an automated case/tray packaging assembly to handle both horizontal and vertical packaging of product in a confined space.

### Background of Invention

Most products sold throughout the world are packaged prior to transport and sale. Many products are packaged in cartons, pouches, trays or the like before product distribution. To make that packaging, a carton blank is fed into a packaging machine by an operator. The carton blank is erected into the desired carton shape ready for transferral to a loading station. At the loading station, an operator or a robot places product into the carton in a specific packaging layout. Typically, the carton is level on a horizontal surface and loaded from above. That is, vertical loading along the Y axis. Vertical packaging machines require dedicated product accumulation.

These existing types of packaging/loading machines create substantial product accumulation waiting to be packed, are slow, costly and labour intensive. Typically, existing packaging/loading machines have a large footprint in a factory area and are not easily adaptable to changing requirements of customers, products, carton and product shapes and sizes. Existing machines are also typically single pick and place units packing products into a horizontal carton individually. Flat packaging machines without vision require pre-layer assembly before picking. Flat packaging machines with vision require valuable floor space for separate carton erection. Further, existing packaging/loading machines typically operate only in a single direction. Examples and possible embodiments of the prior art may be found in WO 2010/003083 A2.

There is a need to increase packaging accuracy, increase packing speed, pack product of any shape and the ability to pack complex configurations.

### Object of Invention

It is an object of the present invention to substantially overcome or at least ameliorate one or more of the disadvantages of the prior art, or to at least provide a useful alternative.

### Summary of Invention

The invention relates to a packaging assembly as described in relation of claim 1.

Possible embodiments of said assembly are described in relation of dependent claims.

### Brief Description of the Drawings

A preferred embodiment of the present invention will now be described, by way of an example only, with reference to the accompanying drawings wherein:

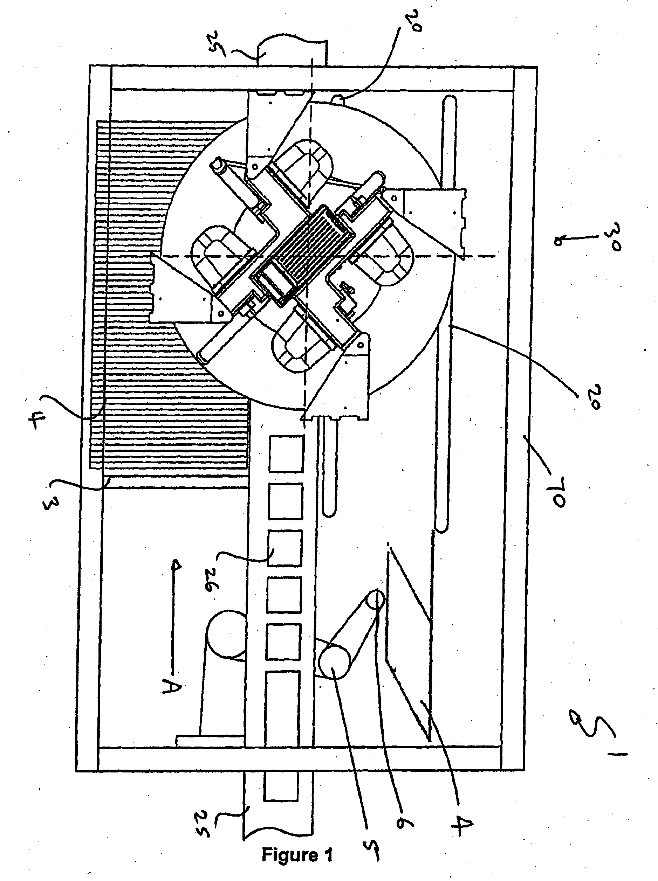

Figure 1 is a plan view of a packaging assembly of an embodiment of the present invention;
Figure 2 is a side view of Figure 1;
Figure 3 is an end view of Figure 1;
Figure 4 is a side view of an embodiment of a gripping assembly; and
Figure 5 is an end view of Figure 4.

### Detailed Description of the Preferred Embodiments

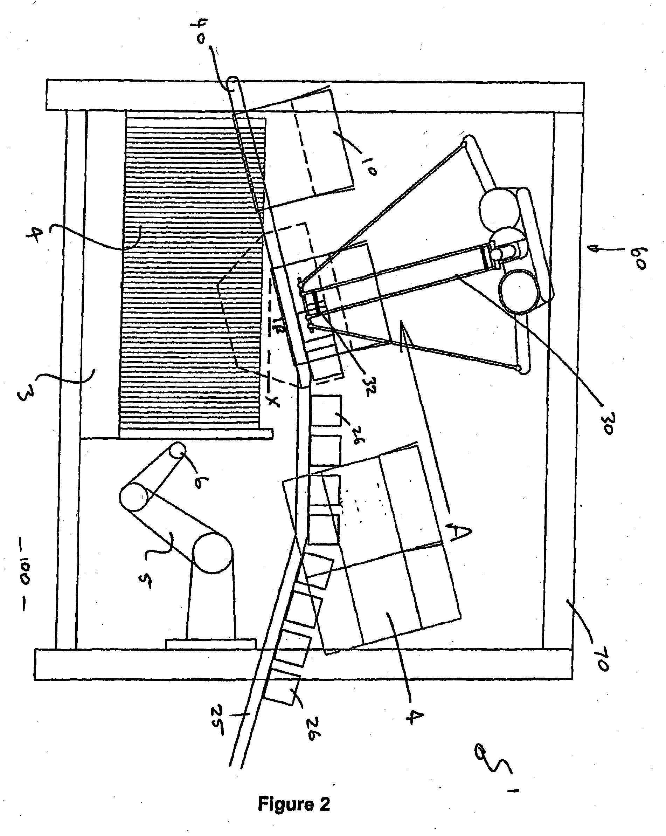

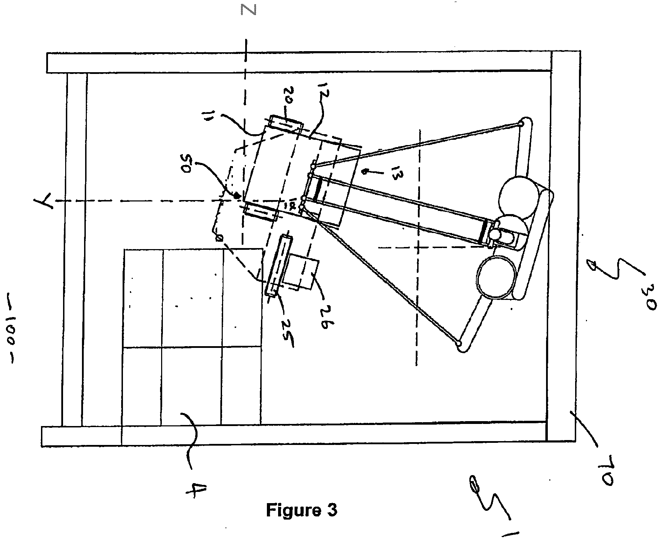

There is schematically depicted herein a packaging assembly 1 having an enclosure 3 to receive one or more carton blanks 4. A first arm 5 includes means 6 to grip a carton blank 4. The first arm 5 being operable to move one or more blanks 4 from a pick-up position at or near the enclosure 3 to a delivery position. The gripping means 6 can include a vacuum, single or multiple axis robot or the like. Means 20 forms the blank 4 into a carton 10 adjacent the delivery position. The carton 10 includes a base 11 and side walls 12 extending upwardly from the base 11 to an open end 13 spaced from the base 11. For example, the means 20 folds the cartons 10 by vacuum, pneumatic cylinders and/or servo control motors. The cartons 10 could for example include RSC cartons, trays, crash-lock cartons or the like. Means 20 moves the carton 10 in a carton loading direction A. There is also a means 25 to move a plurality of product 26 to be packaged in a product loading direction A. The carton and product loading directions A may be the same or different depending upon assembly 1 set up and floor space available. The product 26 could be for example potato chips, cereals or the like. A second arm 30 has means 32 to grip product 26 from the product moving means 25 and delivering the product 26 through the open end 13 into the carton 10. As best seen in Figures 2 and 3, in a preferred form, the carton and product loading directions A have a first component at an angle α to a perpendicular axis Y to a surface 100 upon which the assembly 1 rests. There is also included a second component at an angle β to a parallel axis X to the surface 100. In use, these components α, β ensure that the carton 10 is oriented at an angle so that the product 26 is easily loaded from one lower most edge corner 50 to an opposite diagonal higher most corner (not shown) with respect to the perpendicular and parallel axes X, Y. It should however be noted that in other embodiments the product conveyor 25 could be substantially horizontal or "flat" to assist with picking of product 26.

In the preferred form, the carton 10 and product moving means 20, 25 include one or more conveyors, belts or the like. The carton moving conveyor 20 is preferably located substantially parallel to the product moving conveyor 25 as best seen in Figure 3. In the preferred form, the first and second arms 5, 30 are robotic arms. For example, a two axis robot like an Adept Quattro™ parallel robot or the like. A portion 40 of the carton moving conveyor 20, as best seen in Figure 2, is inclined parallel to the loading direction A. In the preferred form, a portion of the product moving conveyor 25 is also inclined parallel to the loading direction A. The assembly 1 further includes a frame 60 to support the second arm 30 so that in use the second arm 30 is operable to load the product 26 into said carton 10 perpendicular to the loading direction A. The assembly 1 further includes a frame 70 to support the assembly 1 on the surface 100. The carton folding means 20 can also include means (not shown) to apply an adhesive or the like to the base 11 to secure the base 11 together. The fold of the carton 10 is being done by vacuum, pneumatic cylinders and/or servo motors. In the preferred form, the angles α and β range between 0 and 45 degrees to the X and Y axes.

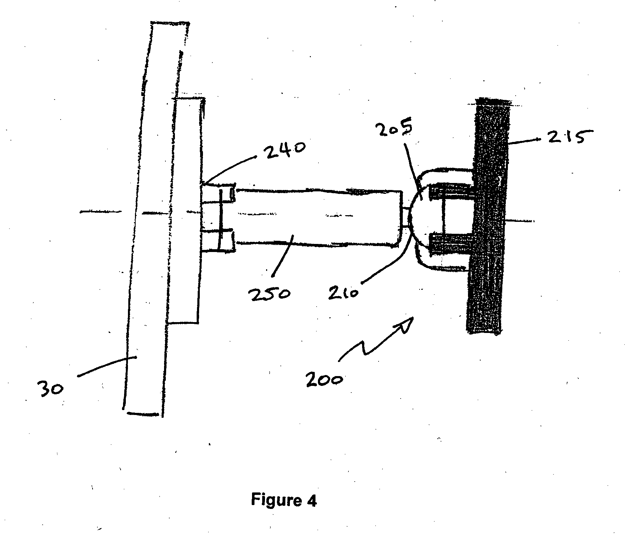

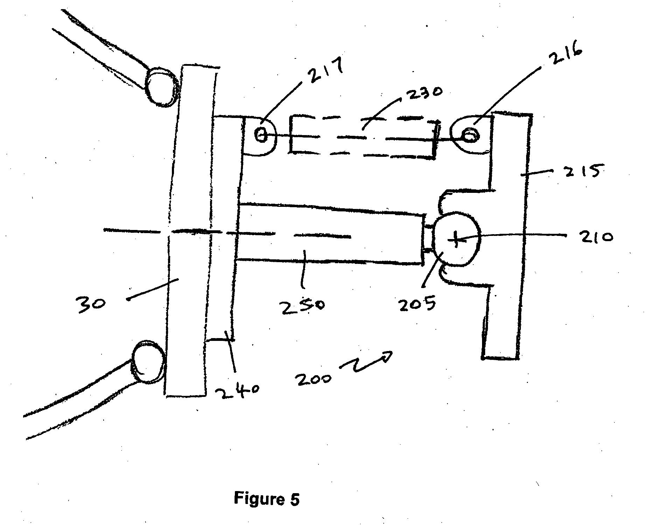

In Figures 4 and 5, there is shown the addition of a pivoting gripper assembly 200. The assembly 200 is attached to the second arm/or robot 30 to permit product 26 to be presented on a flat conveyor 25 whilst still allowing an angular packing ability. The assembly 200 includes a ball joint or the like 205, positioned in the centre of a mounting plate 240 by means of an extension bar 250, with a pivoting point 217 positioned towards the outer diameter of the plate or disk 240. Additional pivoting point 216 is positioned towards the outer diameter of the gripping plate 215. The gripping plate 215 is secured to the ball joint 205. The gripping plate 215 is pivoted around the centre point 210 by means of a pneumatic or servo driven actuator 230 or the like.

The present invention, at least in a preferred embodiment, provides a small packing assembly 1 with flexibility to handle both flat and vertical packing. The cartons 10 are folded and packaged at an angle having an X and Y component. The second arm 30 being able to pack products 26 into the carton 10 either vertically or horizontally with respect to the carton 10 and the type of gripping means 32 being used. That is, the end 13 would either be parallel or perpendicular to the carton conveying means 20. Advantageously, by filling the carton 10 with products 26 while the carton 10 is on an angle having a component in an X and a component in the Y axes allows the carton 10 to be filled from the lowest most point to the highest most point as the carton 10 is travelling through the assembly 1 past the second arm 30. This provides significant speed advantages and efficiencies. Advantageously, the present invention, at least in a preferred embodiment, provides a highly flexible single assembly 1 to handle case/tray erection, horizontal and vertical packing without limited product accumulation. The assembly 1 provides a small footprint to a maximum width of about 2 metres. The assembly 1 will also accommodate customers changing requirements as it is easily adaptable as the products 26 are being loaded from the lowest X, Y corner 50. The corner 50 becomes a natural support for products 26 building up from this spot allows the assembly 1 to handle horizontal and vertical packaging without loosing location or speed. The assembly 1 is suitable for any typical packaged or non-packaged product 26 that can be picked up by a robot 5, 30 and placed in a carton 10. In the preferred embodiment, and as best seen in the drawings, the cartons 10, product and carton conveyors 20, 25 and the second robotic arm 30 are all tilted at the same angle having the same X, Y components. This provides essentially perpendicular packing. The products 26 can be loaded in either direction.

Although the invention has been described with reference to specific examples, it will be appreciated by those skilled in the art that the invention may be embodied in many other forms within the scope of the attached claims.

## Claims

1. A packaging assembly (1) having:
an enclosure (3) to receive carton blanks (4);
a first arm (5) having means to grip (6) a carton blank (4), said first arm (5) being operable to move said blank (4) from a pick up position at said enclosure (3) to a delivery position;
means to form said blank (4) into a carton (10) adjacent said delivery position, said carton (10) having a base (11) and side walls (12) extending upwardly from said base (11) to an open end (13) spaced from said base (11);
a conveyor (20) to move said carton (10) in a loading direction (A);
means to move (25) a plurality of product (26) to be packaged in said loading direction (A); and
a second arm (30) having means to grip (32) said product (26) from said product moving means (25) and delivering said product (26) through said open end (13) into said carton (10); the packaging assembly being **characterized in that**:
a portion (40) of said conveyor (20) has a first incline (β) to a first direction (X), said first direction being parallel to a surface (100) upon which said packaging assembly rests ;
wherein said conveyor (20) has a second angle of 45 degrees to a second direction (Y), said second direction being perpendicular to the surface (100) upon which said packaging assembly rests and being perpendicular to the first direction (X); so that in use said carton when on the portion (40) of conveyor (20), the carton (10) is oriented at an angle such that product can be loaded from the carton's lower most corner (50) to an opposite diagonal higher most corner with respect to said surface (100) upon which said packaging assembly rests.

2. The packaging assembly (1) according to claim 1, wherein said forming means folds said carton blank (4) into a carton (10) at an angle to the surface (100) upon which said packaging assembly rests.

3. The packaging assembly (1) according to claim 1 or 2, wherein said conveyor is located substantially parallel to said product moving means (25).

4. The packaging assembly (1) according to claim 1, wherein said first (5) and second (30) arms are robotic arms.

5. The packaging assembly (1) according to claim 1, wherein a portion of said product moving means (25) is inclined parallel to said loading direction (A).

6. The packaging assembly (1) according to claim 1, including a frame (60) to support said second arm (30), so that in use said second arm (30) is operable to load said product (26) into said carton (10) perpendicular to said loading direction (A).

7. The packaging assembly (1) according to claim 1, including a frame (70) to support said assembly (1) on said surface (100) upon which said packaging assembly rests.

8. The packaging assembly (1) according to claim 1, wherein said loading direction (A) can be reversed.

9. The packaging assembly (1) according to claim 1, including means to apply an adhesive to said base (11) to secure said base (11) together.

## Patentansprüche

1. Verpackungsanordnung (1) mit:
einem Gehäuse (3), um Kartonzuschnitte (4) aufzunehmen;
einem ersten Arm (5) mit einer Einrichtung (6), um einen Kartonzuschnitt (4) zu ergreifen, wobei der erste Arm (5) so betreibbar ist, dass er den Zuschnitt (4) von einer Aufnahmeposition am Gehäuse (3) zu einer Abgabeposition bewegt;
einer Einrichtung, um den Zuschnitt (4) zu einem Karton (10) benachbart zur Abgabeposition zu formen, wobei der Karton (10) eine Basis (11) und Seitenwände (12) hat, die sich von der Basis (11) zu einem von der Basis (11) beabstandeten offenen Ende (13) nach oben erstrecken;
einem Förderer (20), um den Karton (10) in einer Laderichtung (A) zu bewegen;
einer Einrichtung (25), um mehrere zu verpackende Produkte (26) in der Laderichtung (A) zu bewegen; und
einem zweiten Arm (30) mit einer Einrichtung (32), um die Produkte (26) von der Produktbewegungseinrichtung (25) zu ergreifen und die Produkte (26) durch das offene Ende (13) in den Karton (10) abzugeben; wobei die Verpackungsanordnung **dadurch gekennzeichnet ist, dass**:
ein Abschnitt (40) des Förderers (20) eine erste Neigung (β) zu einer ersten Richtung (X) hat, wobei die erste Richtung parallel zu einer Oberfläche (100) ist, auf der die Verpackungsanordnung ruht;
wobei der Förderer (20) einen zweiten Winkel von 45 Grad zu einer zweiten Richtung (Y) hat, wobei die zweite Richtung senkrecht zur Oberfläche (100) ist, auf der die Verpackungsanordnung ruht, und senkrecht zur ersten Richtung (X) ist, so dass im Gebrauch der Karton, wenn er sich auf dem Abschnitt (40) des Förderers (20) befindet, der Karton (10) in einem solchen Winkel orientiert ist, dass Produkte von der tiefsten Ecke (50) zu einer diagonal entgegengesetzten höchsten Ecke des Kartons im Hinblick auf die Oberfläche (100) geladen werden können, auf der die Verpackungsanordnung ruht.

2. Verpackungsanordnung (1) nach Anspruch 1, wobei die Formeinrichtung den Kartonzuschnitt (4) zu einem Karton (10) in einem Winkel zur Oberfläche (100) faltet, auf der die Verpackungsanordnung ruht.

3. Verpackungsanordnung (1) nach Anspruch 1 oder 2, wobei der Förderer im Wesentlichen parallel zur Produktbewegungseinrichtung (25) liegt.

4. Verpackungsanordnung (1) nach Anspruch 1, wobei der erste (5) und zweite Arm (30) Roboterarme sind.

5. Verpackungsanordnung (1) nach Anspruch 1, wobei ein Abschnitt der Produktbewegungseinrichtung (25) parallel zur Laderichtung (A) geneigt ist.

6. Verpackungsanordnung (1) nach Anspruch 1, die einen Rahmen (60) aufweist, um den zweiten Arm (30) zu stützen, so dass im Gebrauch der zweite Arm (30) so betreibbar ist, dass er die Produkte (26) senkrecht zur Laderichtung (A) in den Karton (10) lädt.

7. Verpackungsanordnung (1) nach Anspruch 1, die einen Rahmen (70) aufweist, um die Anordnung (1) auf der Oberfläche (100) zu stützen, auf der die Verpackungsanordnung ruht.

8. Verpackungsanordnung (1) nach Anspruch 1, wobei die Laderichtung (A) umgekehrt werden kann.

9. Verpackungsanordnung (1) nach Anspruch 1, die eine Einrichtung aufweist, um einen Kleber auf die Basis (11) aufzutragen, um die Basis (11) zusammen zu halten.

## Revendications

1. Ensemble d'emballage (1) comportant :
une enceinte (3) pour recevoir des découpes en carton (4);
un premier bras (5) comportant un moyen de préhension (6) d'une découpe en carton (4), ledit premier bras (5) permettant de déplacer ladite découpe (4) depuis une position de saisie au niveau de ladite enceinte (3) jusqu'à une position de distribution ;
un moyen pour former ladite découpe (4) en un carton (10) de manière adjacente à ladite position de distribution, ledit carton (10) comportant une base (11) et des parois latérales (12) s'étendant vers le haut depuis ladite base (11) jusqu'à une extrémité ouverte (13) espacée de ladite base (11) ;
un transporteur (20) pour déplacer ledit carton (10) dans une direction de chargement (A) ;
un moyen pour déplacer (25) une pluralité de produits (26) à emballer dans ladite direction de chargement (A) ; et
un second bras (30) comportant un moyen de préhension (32) dudit produit (26) depuis ledit moyen de déplacement de produit (25) et distribuant ledit produit (26) à travers ladite extrémité ouverte (13) dans ledit carton (10) ;
l'ensemble d'emballage étant **caractérisé en ce que** :
une portion (40) dudit transporteur (20) présente une première inclinaison (β) par rapport à une première direction (X), ladite première direction étant parallèle à une surface (100) sur laquelle repose ledit ensemble d'emballage ;
dans lequel ledit transporteur (20) présente un deuxième angle de 45 degrés par rapport à une seconde direction (Y), ladite seconde direction étant perpendiculaire à la surface (100) sur laquelle ledit ensemble d'emballage repose et étant perpendiculaire à la première direction (X) ;
de telle sorte que lors de l'utilisation dudit carton quand il se trouve sur la portion (40) de transporteur (20), le carton (10) soit orienté selon un angle tel que le produit peut être chargé depuis le coin le plus bas (50) du carton vers un coin le plus haut diagonalement opposé par rapport à ladite surface (100) sur laquelle repose ledit ensemble d'emballage.

2. Ensemble d'emballage (1) selon la revendication 1, dans lequel ledit moyen de formage plie ladite découpe en carton (4) en un carton (10) selon un angle par rapport à la surface (100) sur laquelle repose ledit ensemble d'emballage.

3. Ensemble d'emballage (1) selon la revendication 1 ou 2, dans lequel ledit transporteur se trouve sensiblement parallèle audit moyen de déplacement de produit (25).

4. Ensemble d'emballage (1) selon la revendication 1, dans lequel lesdits premier (5) et second (30) bras sont des bras robotiques.

5. Ensemble d'emballage (1) selon la revendication 1, dans lequel une portion dudit moyen de déplacement de produit (25) est inclinée parallèlement à ladite direction de chargement (A).

6. Ensemble d'emballage (1) selon la revendication 1, incluant un cadre (60) pour supporter ledit second bras (30), telle sorte que lors de l'utilisation ledit second bras (30) permet de charger ledit produit (26) dans ledit carton (10) perpendiculairement à ladite direction de chargement (A).

7. Ensemble d'emballage (1) selon la revendication 1, incluant un cadre (70) pour supporter ledit ensemble (1) sur ladite surface (100) sur laquelle repose ledit ensemble d'emballage.

8. Ensemble d'emballage (1) selon la revendication 1, dans lequel ladite direction de chargement (A) peut être inversée.

9. Ensemble d'emballage (1) selon la revendication 1, incluant un moyen pour appliquer un adhésif à ladite base (11) afin de fixer ladite base (11) ensemble.
